# EUROPÄISCHE PATENTANMELDUNG

(11) **EP 3 299 432 A1**
(43) Veröffentlichungstag der Anmeldung: **28.03.2018**
(21) Anmeldenummer: 16190563.3
(22) Anmeldetag: 26.09.2016
(51) Int. Cl.: C09J 133/06, C08K 3/00, C09J 4/00, C09J 5/00, C09J 11/00, C09J 133/14, F16B 13/14

(54) **ZWEIKOMPONENTEN-MÖRTELMASSE UND DEREN VERWENDUNG**

(71) Anmelder: HILTI Aktiengesellschaft, 9494 Schaan (LI)
(72) Erfinder: Kumru, Memet-Emin, 86199 Augsburg (DE)
(74) Vertreter: Hilti Aktiengesellschaft Corporate Intellectual Property

(57) **Zusammenfassung**

Eine Zweikomponenten-Mörtelmasse umfasst eine Harzkomponente (A), die wenigstens eine härtbare Verbindung mit radikalisch polymerisierbaren Kohlenstoff-Kohlenstoff-Doppelbindungen enthält, und eine Härterkomponente (B), die ein Härtungsmittel für die wenigstens eine härtbare Verbindung der Harzkomponente (A) enthält, wobei die Harzkomponente (A) und/oder die Härterkomponente (B) als weiteren Bestandteil mindestens einen anorganischen Zusatz enthält. Erfindungsgemäß beträgt der der Anteil der radikalisch polymerisierbaren Kohlenstoff-Kohlenstoff-Doppelbindungen in der Mörtelmasse weniger als 0,050 mol pro 100 g der Mörtelmasse.

## Beschreibung

Die Erfindung betrifft eine Zweikomponenten-Mörtelmasse mit einer Harzkomponente (A), die wenigstens ein radikalisch härtbares Harz umfasst, und einer Härterkomponente (B) für das Harz der Harzkomponente (A). Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Aus der EP 0 432 087 und der EP 0 589 831 sind Zweikomponenten-Mörtelmassen auf der Grundlage von Urethan(meth)acrylatharzen bekannt, die durch radikalische Polymerisation aushärten.

Die im Stand der Technik bekannten und als chemische Verbunddübel eingesetzten Mörtelmassen auf der Grundlage von radikalisch härtenden Reaktionsharzen zeigen bereits gute Lastwerte in trockenen und feuchten Bohrlöchern. Allerdings führt der bei der Aushärtung der Reaktionsharze auftretende Polymerisationsschrumpf zu einer Abnahme des Mörtelvolumens. Dadurch kann es einer Leistungsabnahme des Verbunddübels kommen. Insbesondere in diamantgebohrten, nassen Bohrlöchern oder übergroßen Bohrlöchern mit einem Durchmesser, der das 1,5-fache des Ankerdurchmessers übersteigt, ist das Tragverhalten der chemischen Verbunddübel durch den Polymerisationsschrumpf deutlich beeinträchtigt.

Gegenüber dem bekannten Stand der Technik besteht somit weiter Bedarf an Zweikomponenten-Mörtelmassen mit guter Haftung in Bohrlöchern, die einfach zu verarbeiten sind und die verbesserte mechanische Eigenschaften aufweisen.

Insbesondere besteht die Aufgabe, eine Mörtelmasse auf der Grundlage von radikalisch aushärtenden Reaktionsharzen bereitzustellen, die als chemischer Verbunddübel verwendet werden kann und die dauerhaft gute Lastwerte zeigt.

Es hat sich überraschenderweise gezeigt, dass diese Aufgabe durch eine Zweikomponenten-Mörtelmasse gemäß Anspruch 1 gelöst wird.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Masse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit einer Harzkomponente (A), die wenigstens eine härtbare Verbindung mit radikalisch polymerisierbaren Kohlenstoff-Kohlenstoff-Doppelbindungen enthält, und einer Härterkomponente (B), die ein Härtungsmittel für die wenigstens eine härtbare Verbindung der Harzkomponente (A) enthält, wobei die Harzkomponente (A) und/oder die Härterkomponente (B) als weiteren Bestandteil mindestens einen anorganischen Zusatz enthält. Erfindungsgemäß beträgt der der Anteil der radikalisch polymerisierbaren Kohlenstoff-Kohlenstoff-Doppelbindungen in der Mörtelmasse weniger als 0,050 mol pro 100 g der Mörtelmasse.

Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber niedriggefüllten Massen deutlich erhöht sind und außerdem über lange Zeit stabil bleiben. Überraschenderweise wurde gefunden, dass durch eine gezielte Auswahl der radikalisch polymerisierbaren Komponenten der Harzkomponente (A) der molare Anteil an ethylenisch ungesättigten Doppelbindungen in der Mörtelmasse gesteuert und der Polymerisationsschrumpf auf unter 3 % gedrückt werden kann. Da bezogen auf die Gesamtmasse des Mörtels weniger (Meth)Acrylatgruppen für die Polymerisation zur Verfügung stehen, ist auch die Volumenkontraktion der Masse in Folge der Polymerisationsreaktion verringert. Überraschend ist jedoch, dass sich auch die Lastwerte der auf diese Weise modifizierten Zweikomponenten-Massen gegenüber solchen mit einem höheren Anteil an polymerisierbaren Komponenten sogar verbessern oder jedenfalls nicht wesentlich verschlechtern.

Unter einer "Zweikomponenten-Mörtelmasse" wird im Sinne der Erfindung eine Mörtelmasse verstanden, die aus einer härtbaren Reaktionsharzkomponente und einer Härterkomponente für die Harzkomponente besteht, wobei die Reaktionsharzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktionsharz unmittelbar vor der Anwendung der Mörtelmasse wird die Aushärtung des Reaktionsharzes gestartet.

Gemäß einer bevorzugten Ausführungsform beträgt der Anteil der radikalisch polymerisierbaren Kohlenstoff-Kohlenstoff-Doppelbindungen, das heißt der ethylenisch ungesättigten Doppelbindungen, in der Mörtelmasse höchstens 0,045 mol pro 100 g der Mörtelmasse, bevorzugt höchstens 0,040 mol pro 100 g Mörtelmasse. Durch die Steuerung des Anteils der radikalisch polymerisierbaren Kohlenstoff-Kohlenstoff-Doppelbindungen lässt sich erreichen, dass der Polymerisationsschrumpf der Mörtelmasse unter 3 % liegt, bevorzugt unter 2,5 %.

Die Steuerung des Anteils der radikalisch polymerisierbaren, ethylenisch ungesättigten Doppelbindungen in der Mörtelmasse kann durch verschieden Maßnahmen erreicht werden. Als besonders wirksam hat sich eine gezielte Auswahl der zur Herstellung der Harzkomponente (A) verwendeten härtbaren Verbindungen erwiesen.

Bevorzugt umfassen die in der Harzkomponente (A) enthaltenen härtbaren Verbindungen mindestens ein radikalisch härtbares Harz sowie mindestens einen Reaktivverdünner, wobei wenigstens einer der Reaktivverdünner eine erhöhte Molmasse von mindestens 250 g/mol aufweist, besonders bevorzugt von mindestens 300 g/mol. Durch die Verwendung eines Reaktivverdünners mit einer erhöhten Molmasse kann der molare Anteil an Kohlenstoff-Kohlenstoff-Doppelbindungen in der Mörtelmasse wirksam gesteuert und der Polymerisationsschrumpf merklich reduziert werden.

Der Anteil des Reaktivverdünners mit erhöhter Molmasse an der Gesamtmasse der Reaktivverdünner beträgt bevorzugt mindestens 50 Gewichtsprozent, weiter bevorzugt mindestens 75 Gewichtsprozent.

Gemäß einer besonders bevorzugten Ausführungsform weisen alle in der Harzkomponente (A) eingesetzten Reaktivverdünner eine erhöhte Molmasse von mindestens 250 g/mol auf, bevorzugt mindestens 300 g/mol. Mit dieser Auswahl der Reaktivverdünner kann der Polymerisationsschrumpf der Mörtelmasse besonders wirksam reduziert werden.

Geeignete Reaktivverdünner mit einer erhöhten Molmasse von über 300 g/mol umfassen insbesondere Trimethylolpropantri(meth)acrylat, Methoxypolyethylenglykolmono(meth)acrylat, Tricyclopentadienyldi(meth)acrylat, Bisphenol-A-(meth)acrylat, Novolakepoxidi(meth)acrylat, Di-[(meth)acryloylmaleoyl]-tricyclo-5.2.1.0.2.6-decan, PEG-di(meth)acrylate, wie PEG200-di(meth)acrylat, Tetraethylenglykoldi(meth)acrylat, ethoxyliertes Bisphenol-A-diglycidyletherdi(meth)acrylat (E2BADMA; Mw = 362,4 g/mol), Tricyclodekandimethanoldimethacrylat (TCDDMA; Mw = 323,4 g/mol) und Norbornencarbonsäureglycidylethermethacrylat (Mw = 250,3 g/mol) sowie Mischungen davon.

Das radikalisch härtbare Harz in der Komponente (A) der Mörtelmasse umfasst bevorzugt ein Urethan(meth)acrylatharz.

Besonders bevorzugt wird ein hochmolekulares härtbares Harz eingesetzt, das ein mittleres Molekulargewicht Mₙ in einem Bereich von 400 bis 3000 g/mol aufweist. Bevorzugt werden hochmolekulare Harze eingesetzt, die eine Doppelbindungsanteil von 1 bis 4 Doppelbindungen pro Molekül aufweisen. Durch die Verwendung von hochmolekularen härtbaren Harzen kann der molare Anteil der Kohlenstoff-Kohlenstoff-Doppelbindungen in der Mörtelmasse bereits erniedrigt werden.

Zur Herstellung eines geeigneten Urethan(meth)acrylatharzes kann ein mindestens difunktionelles Isocyanat mit einer oder mehreren hydroxyfunktionellen, ethylenisch ungesättigten Verbindungen umgesetzt werden, insbesondere mit hydroxyfunktionellen (Meth)acrylverbindungen.

Das mindestens difunktionelle Isocyanat zur Herstellung des Urethan(meth)acrylatharzes kann ein aromatisches Isocyanat, ein aliphatisches Isocyanat, insbesondere ein cycloaliphatisches Isocyanat und ein Isocyanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2-4-diisocyanat, Toluylen-2-6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl4,4'-biphenyldiisocyanat, 3,3'-Dimethyldiphenylmethan-4,4'-diisocyanat, 4,4',4"-Triphenylmethantriisocyanat, Polymethylenpolyphenylisocyanat (PMDI), Toluylen-2,4,6-triisocyanat und 4,4'-Dimethyldiphenylmethan-2,2',5,5'-tetraisocyanat.

Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des Urethan(meth)acrylatharzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glyceroldi(meth)acrylat, Trimethylolpropandi(meth)acrylat und Neopentylglycolmono(meth)acrylat.

Die hier und im Folgenden verwendete Bezeichnung "(Meth)acryl..." oder "...(meth)acryl..." bedeutet, dass von dieser Bezeichnung sowohl die Acrylgruppe als auch die Methacrylgruppe umfasst sein soll.

Die Umsetzung des mindestens difunktionellen Isocyanats mit der hydroxyfunktionellen, ethylenisch ungesättigten Verbindung erfolgt derart, dass das so erhaltene radikalisch polymerisierbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu wird die hydroxyfunktionelle, ethylenisch ungesättigte Verbindung in einem stöchiometrischen Überschuss über die Isocyanatgruppen eingesetzt.

Als weitere radikalisch polymerisierbare Harze können beispielsweise Vinylester, Epoxy(meth)acrylate, ungesättigte Polyesterharze und Mischungen davon eingesetzt werden, allein oder auch zusammen mit dem oben beschriebenen (Poly)urethan(meth)acrylat.

Ungesättigte Polyesterharze werden durch Umsetzung von ungesättigten Dicarbonsäuren wie o- und/oder iso-Phthalsäure, Maleinsäure und Fumarsäure mit Dialkoholen erhalten.

Als Epoxy(meth)acrylate werden üblicherweise Kondensate von (Meth)acylsäure mit Glycidylethern von Bisphenol-A, Bisphenol-F oder Novolaken eingesetzt.

Neben dem Reaktivverdünner mit erhöhter Molmasse können in der Harzkomponente (A) zusätzlich alle im Stand der Technik bekannten Reaktivverdünner mit wenigstens einer ethylenisch ungesättigten Gruppe eingesetzt werden. Geeignete Reaktivverdünner sind insbesondere (Meth)acrylatverbindungen sowie Allyl- und Vinylverbindungen, insbesondere (Meth)acrylsäureester, wobei besonders bevorzugt aliphatische oder aromatische C₅-C₁₅-(Meth)acrylate ausgewählt werden. Solche Reaktivverdünner sind in der EP 1 935 860 A1 und der DE 195 31 649 A1 beschrieben.

Beispiele für derartige Reaktivverdünner umfassen: Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat (BBDMA), Phenethyl(meth)acrylat, Tetrahydrofurfuryl(meth)acrylat, Ethyltriglykol(meth)acrylat, *N*,*N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Trimethylcyclohexyl(meth)acrylat, 2-Hydroxyethyl(meth)acrylat, 3-(Meth)acryloyloxymethyl-tricylo-5.2.1.0.26-decan, 3-(Meth)cyclopentadienyl(meth)acrylat, Isobornyl(meth)acrylat und Decalyl-2-(meth)acrylat; Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat.

Grundsätzlich können auch andere übliche, radikalisch polymerisierbare Verbindungen, allein oder im Gemisch mit den (Meth)acrylsäureestern, eingesetzt werden, z. B. Styrol, α-Methylstyrol, alkylierte Styrole, wie *tert-*Butylstyrol, Divinylbenzol und Allylverbindungen, wobei die nicht kennzeichnungspflichtigen Vertreter davon bevorzugt sind.

Die Reaktionsverdünner dienen zum einen als Lösungsmittel für das radikalisch polymerisierbare Harz und zum anderen als ein Comonomer, das an der radikalischen Polymerisation der Harzkomponente teilnimmt. Die Verwendung von Reaktionsverdünnern führt zu einer weiteren Verbesserung der Haftung der ausgehärteten Mörtelmasse an den Oberflächen des mineralischen Untergrunds und/oder des zu befestigenden Bauteils.

Bevorzugte Reaktivverdünner weisen höchstens eine oder zwei Kohlenstoff-Kohlenstoff-Doppelbindungen im Molekül auf. Höherfunktionelle Reaktivverdünner führen zur Bildung starrer dreidimensionaler Netzwerke und damit zu einem erhöhten Polymerisationsschrumpf.

Der Anteil des radikalisch polymerisierbaren Harzes an der Gesamtmasse der ethylenisch ungesättigten, radikalisch polymerisierbaren Verbindungen in der Harzkomponente (A) liegt vorzugsweise in einem Anteil von 50 bis 90 Gewichtsprozent. Der Anteil der Reaktivverdünner und bevorzugt des Reaktivverdünners mit erhöhter Molmasse beträgt bevorzugt 10 bis 50 Gewichtsprozent, bezogen auf die Gesamtmasse der radikalisch polymerisierbaren Verbindungen.

In der Harzkomponente (A) kann das radikalisch polymerisierbaren Harz ein einem Anteil von 10 bis 45 Gewichtsprozent vorliegen. Der Anteil der Reaktivverdünner liegt vorzugsweise in einem Bereich von 2 bis 25 Gewichtsprozent, besonders bevorzugt von 3 bis 20 Gewichtsprozent.

Die Gesamtmasse der radikalisch polymerisierbaren Verbindungen in der Harzkomponente (A) beträgt bevorzugt höchstens 50 Gewichtsprozent, weiter bevorzugt von 20 bis 40 Gewichtsprozent, jeweils bezogen auf das Gesamtgewicht der Harzkomponente (A).

Neben den radikalisch polymerisierbaren Verbindungen enthält die Harzkomponente (A) wenigstens einen anorganischen Zusatz.

Bevorzugt ist der anorganische Zusatz aus der aus anorganischen Füllstoffen, hydraulisch abbindenden oder polykondensierbaren anorganischen Verbindungen, Modifikatoren und Mischungen davon bestehenden Gruppe ausgewählt.

Besonders bevorzugt umfasst der anorganische Zusatz einen Füllstoff, der in der Harzkomponente (A) und/oder in der Härterkomponente (B) enthalten sein kann. Beispiele für geeignete Füllstoffe sind Quarz, Glas, Korund, Porzellan, Steingut, Schwerspat, Leichtspat, Gips, Talkum und/oder Kreide sowie deren Mischungen in Form von Sanden, Mehlen oder Formkörpern, vorzugsweise in Form von Fasern oder Kugeln.

Gemäß einer weiter bevorzugten Ausführungsform der Erfindung umfasst der anorganische Zusatz ferner eine hydraulisch abbindende oder polykondensierbare anorganische Verbindung, wie Zement und/oder Gips, vorzugsweise Eisenoxid-freien oder Eisenoxid-armen Zement wie Aluminat-Zement. Die hydraulisch abbindende oder polykondensierbare anorganische Verbindung ist vorzugsweise in der Härterkomponente (A) enthalten. Die Härterkomponente (B) umfasst in diesem Fall neben dem Härtungsmittel und dem für die Phlegmatisierung des Härtungsmittels wahlweise enthaltenen Wassers noch zusätzliches Wasser für das Aushärten der hydraulisch abbindenden oder polykondensierbaren anorganischen Verbindung.

Schließlich kann der anorganische Zusatz in der Harzkomponente (A) und/oder in der Härterkomponente (B) noch weitere anorganische Modifikatoren wie Verdicker, Verflüssiger und Thixotropiermittel enthalten, beispielsweise gefällte oder pyrogene Kieselsäure, Bentonite und/oder Kaolin.

Bevorzugt liegt der anorganische Zusatz in der Harzkomponente (A) in einem Anteil von mindestens 50 Gewichtsprozent vor, bevorzugt in einem Anteil von 60 bis 80 Gewichtsprozent, jeweils bezogen auf die Gesamtmasse der Harzkomponente (A). Auch hohe Füllgrade können zur Steuerung des Anteils der Kohlenstoff-Kohlenstoff-Doppelbindungen in der Mörtelmasse beitragen und den Polymerisationsschrumpf merklich reduzieren.

Gemäß einer bevorzugten Ausführungsform liegt der anorganische Zusatz in der Mörtelmasse in einem Anteil von 70 bis 80 Gewichtsprozent vor, bezogen auf das Gesamtgewicht der Masse. Bei Anteilen des anorganischen Zusatzes von über 80 Gewichtsprozent lassen sich die Massen nicht mehr sicher verarbeiten, da wegen der hohen Viskosität der hochgefüllten Massen keine homogene Vermischung mehr erreicht werden kann.

Darüber hinaus kann die Harzkomponente (A) wenigstens einen Beschleuniger für das Härtungsmittel enthalten. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, *tert*-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxyethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Amino-hexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylate.

Die Harzkomponente (A) kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Beschleuniger und/oder Co-Beschleuniger sind vorzugsweise in einem Anteil von 0 bis 3 Gewichtsprozent, bevorzugt 0,01 - 1,5 Gew.-%, in der Harzkomponente (A) enthalten.

Weiterhin kann die Harzkomponente (A) einen oder mehrere der üblichen Polymerisationsinhibitoren zur Stabilisierung der Harzmischungen gegen vorzeitige Polymerisation und zur Einstellung der Gelzeit enthalten, vorzugsweisen in einem Anteil von 0 bis 1 Gewichtsprozent, bezogen auf das Gesamtgewicht der Harzkomponente (A). Als Polymerisationsinhibitoren sind die für radikalisch polymerisierbare Verbindungen üblicherweise verwendeten Polymerisationsinhibitoren geeignet, wie sie dem Fachmann bekannt sind.

Beispiele für derartige Polymerisationsinhibitoren sind insbesondere Hydrochinon, substituierte Hydrochinone, z.B. 4-Methoxyphenol, Phenothiazin, Benzochinon oder *tert*-Butylbrenzkatechin, wie sie beispielsweise in der EP 1935860 A1 oder EP 0965619 A1 beschrieben werden, Nitroxylverbindungen, insbesondere stabile Nitroxylradikale, auch N-Oxyl-Radikale genannt, wie Piperidinyl-N-oxyl oder Tetrahydropyrrol-N-oxyl, wie sie in der DE 19531649 A1 beschrieben sind. Besonders bevorzugt wird 4-Hydroxy-2,2,6,6-tetramethylpiperidin-N-oxyl (im Folgenden als Tempol bezeichnet) zur Stabilisierung verwendet.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert*-butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p-*cresol, Brenzkatechin und Butylbrenzkatechine, wie 4-*tert*-Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-*tert*-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen. Ferner können in para-Position zur Hydroxylgruppe substituierte Pyrimidinol- oder Pyridinol-Verbindungen als Polymerisationsinhibitoren verwendet werden, wie sie in der DE 10 2011 077 248 B1 beschrieben sind.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Schließlich kann die Harzkomponente (A) noch weitere organische Zusätze wie Haftverbesserer auf der Grundlage von Silanverbindungen enthalten, wie sie dem Fachmann beispielsweise aus der EP 2 371 782 A2 und der WO 2011/072789 A1 bekannt sind.

Eine beispielhafte Zusammensetzung der Harzkomponente (A) besteht aus:
einem radikalisch härtbaren Harz in einem Anteil von 10 bis 45 Gew.-%;
wenigstens einem Reaktivverdünner in einem Anteil von 5 bis 25 Gew.-%;
einem Beschleuniger in einem Anteil von 0 bis 3,0 Gew.-%;
einem Reaktionsinhibitor in einem Anteil von 0 bis 1 Gew.-%; und wenigstens einem anorganischen Zusatz in einem Anteil von 50 bis 80 Gew.-%;
wobei die Summe aller Anteile 100 Gewichtsprozent ergibt, und wobei das Gewichtsverhältnis von Reaktivverdünner zu radikalisch härtbarem Harz vorzugsweise in einem Bereich von 1:5 bis 2:1 liegt bevorzugt von 1:3 bis 2:1.

Das in der Härterkomponente (B) der erfindungsgemäßen Zweikomponenten-Mörtelmasse enthaltene Härtungsmittel für das radikalisch polymerisierbare Harz der Harzkomponente (A) umfasst vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Zur Einstellung einer geeigneten Viskosität kann die Härterkomponente einen Anteil an anorganischen Füllstoffen und Modifikatoren wie Thixotropiermittel enthalten.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Das Gewichtsverhältnis der Harzkomponente (A) zur Härterkomponente (B) wird so gewählt, dass die Harzkomponente nach dem Vermischen mit der Härterkomponente zuverlässig aushärtet. Über den Anteil der Polymerisationsinhibitoren in der Harzkomponente (A) kann die Gelzeit der Mischung und damit die zur Verarbeitung der gemischten Masse verfügbare Zeit eingestellt werden. Bevorzugt liegt das Gewichtsverhältnis der Harzkomponente (A) zur Härterkomponente (B) in einem Bereich von 4:1 bis 7:1, und das Gewichtsverhältnis von (Meth)acrylatharz/Reaktivverdünner zu Härtungsmittel liegt im Bereich von 10:1 bis 15:1.

Die erfindungsgemäßen Zweikomponenten-Mörtelmassen können vorteilhaft die nachfolgende Gesamtzusammensetzung aus Harzkomponente (A) und Härterkomponente (B) aufweisen:
mindestens ein radikalisch härtbares Harz mit einem mittleren Molekulargewicht Mₙ in einem Bereich von 400 bis 3000, in einem Anteil von 10 bis 45 Gew.-%;
mindestens einen Reaktivverdünner in einem Anteil von 5 bis 25 Gew.-%;
organisches Peroxid in einem Anteil von 0,5 bis 5 Gew.-%;
Polymerisationsbeschleuniger in einem Anteil von 0 bis 3,0 Gew.-%;
Polymerisationsinhibitoren in einem Anteil von 0 bis 1,0 Gew.-%;
anorganische Zusätze in einem Anteil von 50 bis 80 Gew.-%; und
Wasser in einem Anteil von 0 bis 10 Gew.%.

Die Summe aller Anteile der Masse ergibt 100 Gewichtsprozent. Das Gewichtsverhältnis von Reaktivverdünner zu radikalisch härtbarem Harz liegt vorzugsweise in einem Bereich von 2:1 bis 1:5, bevorzugt 2:1 bis 1:3. Der Reaktivverdünner weist bevorzugt ein erhöhtes Molekulargewicht von mindestens 250 g/mol auf, weiter bevorzugt mindestens 300 g/mol. Der Anteil der radikalisch polymerisierbaren, ethylenisch ungesättigten Doppelbindungen in der Mörtelmasse beträgt weniger als 0,050 mol pro 100 g Mörtelmasse, bevorzugt weniger als 0,045 mol pro 100 g Mörtelmasse.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischen Untergrund, vorzugsweise Beton, vorliegen.

Weitere Vorteile der Erfindung ergeben sich aus der folgenden Beschreibung bevorzugter Ausführungsbeispiele mit Bezug auf die beigefügten Zeichnungen. Die Ausführungsbeispiele sollen jedoch in keiner Weise einschränkend verstanden werden. In den Zeichnungen zeigen:
- Figur 1 ein Diagramm mit einer Darstellung des linearen Schrumpfes von Mörtelmassen in Abhängigkeit vom molaren Anteil der radikalisch polymerisierbaren Doppelbindungen in der Mörtelmasse;
- Figur 2 ein Diagramm mit einer Darstellung der aus einem Stahlhülsentest ermittelten Verbundspannung von Mörtelmassen in Abhängigkeit von der Hinterschnitttiefe der Stahlhülse.

### Beispiele 1 bis 7

### Zweikomponenten-Mörtelmasse auf Basis eines Urethanmethacrylatharzes

Man bereitet zunächst die Harzkomponente (A) einer Zweikomponenten-Mörtelmasse dadurch, dass man 34,5 g organische Bestandteile der Harzkomponente (A) mit 44,2 g eines Quarzsandes, 18,5 g eines Aluminat-Zements und 2,8 g einer hydrophoben pyrogenen Kieselsäure als Thixotropiermittel im Dissolver unter Vakuum zu einer luftblasenfreien pastösen Masse homogenisiert. Die auf diese Weise erhaltenen Harzkomponenten (A) werden jeweils in eine Kartusche eingebracht.

Als Härterkomponente (B) der Zweikomponenten-Mörtelmasse verwendet man eine wässrige Benzoylperoxidsuspension mit einem Feststoffanteil von 35 Gewichtsprozent, in dem 64 Gew.-% Füllstoff in Form von 44 Gew.-% Quarzmehl und 20 Gew.-% Tonerde (hochkalziniertes Aluminiumoxid), 1 Gew.-% pyrogene Kieselsäure, und 35 Gew.-% Benzoylperoxid enthalten sind. Der Anteil an Benzoylperoxid in der Härterkomponente (B) liegt somit bei 12,25 Gew.-% und der Wasseranteil bei 22,75 Gew.-%, bezogen auf das Gewicht der Härterkomponente (B). Die Härterkomponente (B) wird in eine zweite Kartusche eingefüllt.

Das Gewichtsverhältnis der Harzkomponente (A) zur Härterkomponente (B) beträgt 4,8 : 1, wobei das Verhältnis von (Meth)Acrylatharz zu Benzoylperoxid auf 13,5 : 1 eingestellt wird.

Die Zusammensetzung der organischen Bestandteile der Harzkomponente (A) ist in der folgenden Tabelle 1 angegeben.

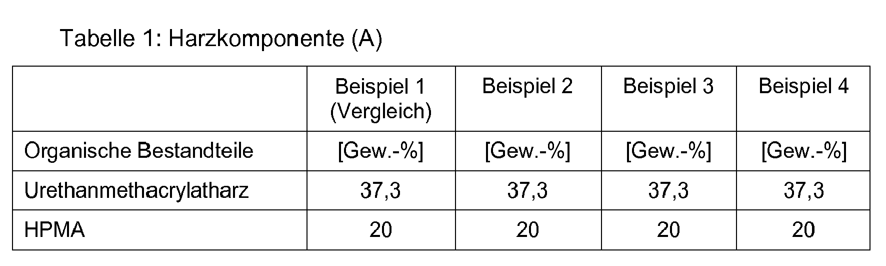

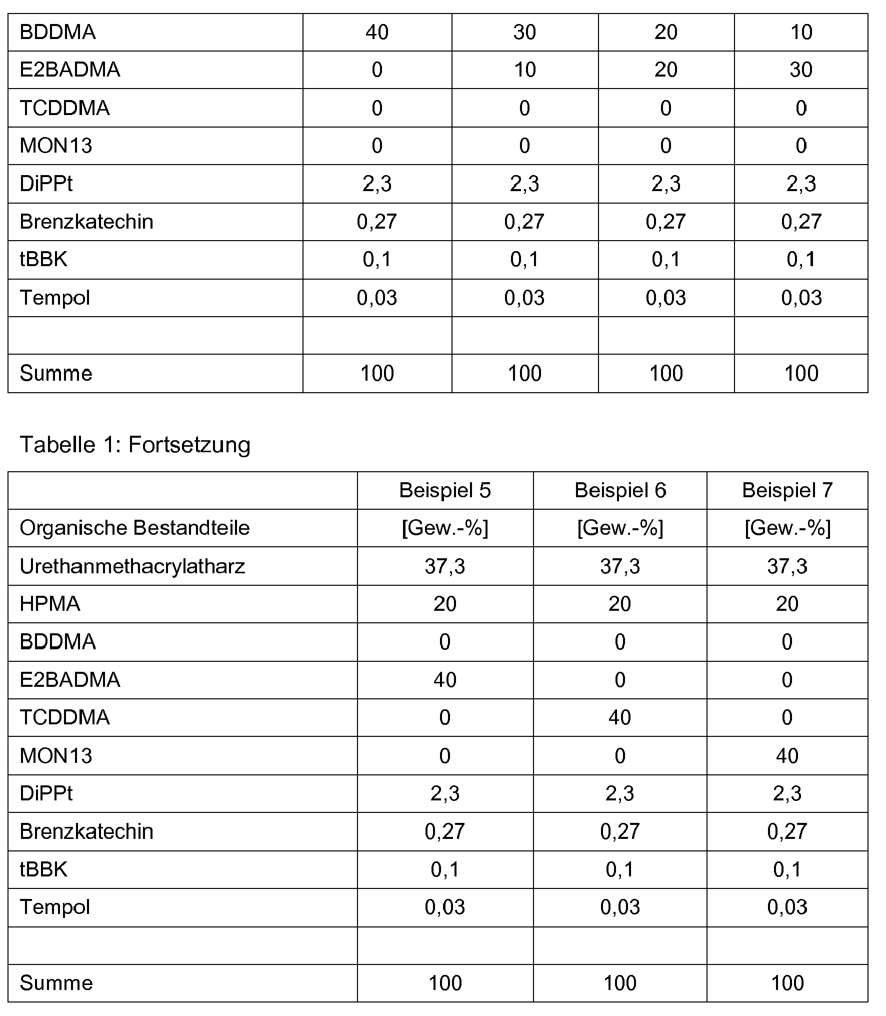

In der obigen Tabelle 1 bedeuten:
- HPMA:: 2-Hydroxypropyl(meth)acrylat (Reaktivverdünner; Mw = 144,17 g/mol)
- BDDMA:: 1,4-Butandioldi(meth)acrylat (Reaktivverdünner; Mw = 226,3 g/mol)
- E2BADMA:: ethoxyliertes Bisphenol-A-diglycidyletherdi(meth)acrylat (Reaktivverdünner; Mw = 362,4 g/mol),
- TCDDMA:: Tricyclodekandimethanoldimethacrylat (Reaktivverdünner; Mw = 323,4 g/mol)
- MON13:: Norbornencarbonsäureglycidylethermethacrylat (Reaktivverdünner; Mw = 250,3 g/mol)
- DiPPt:: N,N-Bis(2-hydroxypropyl)-p-toluidin (Beschleuniger)
- Brenzkatechin:: 1,2-Dihydroxybenzol (Inhibitor)
- tBBK:: tert-Butylbrenzkatechin (Inhibitor)
- Tempol:: 4-Hydroxy-2,2,6,6-tetramethylpiperidin-N-oxyl (Inhibitor)

Zur Anwendung als chemische Mörtelmasse zur Befestigung von Bauteilen werden die Harzkomponente (A) und die Härterkomponente (B) aus den Kartuschen ausgepresst und durch einen Statikmischer geführt, wodurch die Reaktion dieser Komponenten unter Aushärtung des Reaktionsharzes und wahlweise des Zements einsetzt. Die reagierende Masse wird in das Bohrloch eingespritzt, worauf das zu befestigende Bauteil eingeführt und justiert wird.

### Beispiel 8

### Bestimmung des Schwindungsverhaltens

Das Schwindungsverhalten der Mörtelmassen gemäß den Beispielen 1 bis 7 wird durch Messung der linearen Dickenänderung eines Mörtelbetts mittels eines Laserstrahls beim Aushärten bestimmt. Zur Durchführung der Messung werden 2,5 g der gemischten Mörtelmasse mit einem Spatel auf eine Stahlplatte aufgebracht, die links und rechts von 2,5 mm hohen Abstandshaltern begrenzt ist. Auf den Mörtel wird ein 0,5 mm dickes Stahlplättchen als Reflektor aufgelegt. Mit einer weiteren Stahlplatte wird der Mörtel mitsamt der Reflektorplatte auf eine Höhe von 2,5 mm plattgedrückt. Die Mörtelhöhe beträgt somit genau 2 mm. Für die Messung wird die obere Stahlplatte wieder entfernt, und die Dickenänderung des Mörtelbetts während der Aushärtung wird durch Reflexion eines Laserstrahls an der Reflektorplatte bestimmt. Es werden mindestens 5 Messungen durchgeführt und ein Mittelwert gebildet.

In der nachfolgenden Tabelle 2 sind die so ermittelten Messwerte für die lineare Schwindung des Mörtelbetts als Prozentwerte bezogen auf die Anfangsdicke des Mörtelbetts angegeben. Außerdem ist in der Tabelle 2 der für die Beispiele 1 bis 7 errechnete molare Anteil der Kohlenstoff-Kohlenstoff-Doppelbindungen pro 100 g der gemischten Mörtelmasse angegeben. Der molare Anteil der Doppelbindungen in der Mörtelmasse ergibt sich aus der Summe der molaren Anteile der jeweiligen radikalisch härtbaren Verbindungen in der Mörtelmasse, jeweils multipliziert mit der Anzahl der Doppelbindungen pro Molekül der radikalisch härtbaren Verbindung.

**Tabelle 2: Molarer Anteil an Doppelbindungen und Polymerisationsschrumpf**

| | Schwindung [%] | Doppelbindungsanteil [mol pro 100 g Mörtel] |
|---|---|---|
| Beispiel 1 | 3,3 | 0,0504 |
| Beispiel 2 | 2,5 | 0,0469 |
| Beispiel 3 | 2,3 | 0,0434 |
| Beispiel 4 | 2,1 | 0,0399 |
| Beispiel 5 | 1,6 | 0,0364 |
| Beispiel 6 | 2,5 | 0,0415 |
| Beispiel 7 | 2,8 | 0,0477 |

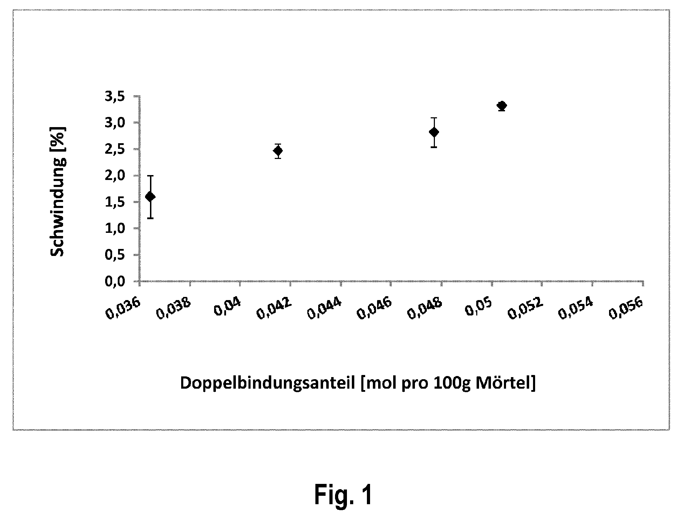

In Fig. 1 sind die Ergebnisse der Messung des linearen Schrumpfes der Mörtelmassen gemäß Beispiel 1 (Vergleich) und den Beispielen 5 bis 7 in Abhängigkeit vom Doppelbindungsanteil in der Mörtelmasse dargestellt. Wie zu erkennen ist, ergibt sich eine nahezu lineare Abhängigkeit des Schrumpfverhaltens vom Anteil der ethylenisch ungesättigten Doppelbindungen in der Mörtelmasse. Auch die Beispiele 1 bis 5 zeigen, dass durch den Ersatz eines herkömmlichen Reaktivverdünners durch einen Reaktivverdünner mit erhöhter Molmasse der Doppelbindungsanteil gezielt gesenkt und damit das Schwindungsverhalten der Mörtelmasse eingestellt werden kann.

### Beispiel 9

### Bestimmung der Verbundspannung

Zur Bestimmung der mit Zweikomponenten-Mörtelmassen gemäß den Beispielen 1 und 5 erzielten Verbundspannung wird der gemischte Mörtel in eine Stahlhülse mit definierter Geometrie und definierter Füllhöhe des Mörtels (Einbindetiefe) eingebracht, Anschließend wird eine Ankerstange mittels einer Zentrierhilfe mittig in der mit Mörtel gefüllten Stahlhülse platziert. Nach Aushärtung des Mörtels bei Raumtemperatur und für mindestens 12 Stunden wird die Probe mit Hilfe eines Gewindeadapters in eine Zugprüfmaschine eingeschraubt (Fabrikat: Zwick Roell Z050, 50 kN). Die Probe wird mit Zugkraft bei definierter Geschwindigkeit bis zum Versagen belastet. Die entsprechende Kraft-Weg-Abhängigkeit wird kontinuierlich registriert. Es werden jeweils fünf Einzelmessungen durchgeführt und der Mittelwert der maximalen Kraft beim Versagen berechnet.

Zur Durchführung der Messungen wurden Ankerstangen mit Gewinde M8 und Stahlhülsen mit folgender Geometrie verwendet:
Hinterschnitttiefe: 0,35+/-0,02 mm
Hinterschnittbreite: 2mm
Einbindetiefe: 36mm
Innendurchmesser: 14 mm

Die aus diesen Versuchen ermittelte Verbundspannung ist definiert als der Quotient aus maximaler Kraft beim Versagen und der Scherfläche der verwendeten Ankerstange (Ankerstange M8: 904,3 mm²).

Die unter Verwendung der Mörtelmassen mit Harzzusammensetzungen gemäß den Beispielen 1 bis 7 erhaltenen Verbundspannungen sind in der nachfolgenden Tabelle 2 zusammengestellt:

**Tabelle 2: Verbundspannung der Mörtelmassen**

| | Schwindung [%] | Verbundspannung [MPa] |
|---|---|---|
| Beispiel 1 | 3,3 | 28,1 |
| Beispiel 2 | 2,5 | 29,0 |
| Beispiel 3 | 2,3 | 28,2 |
| Beispiel 4 | 2,1 | 26,5 |
| Beispiel 5 | 1,6 | 26,9 |

Wie aus den in Tabelle 3 dargestellten Ergebnissen zu erkennen ist, zeigen die erfindungsgemäßen Zweikomponenten-Mörtelmasse gegenüber der Referenzmasse gemäß Beispiel 1 trotz eines höheren Molekulargewichts des eingesetzten Reaktivverdünners und des niedrigeren Doppelbindungsanteils in der Mörtelmasse im Wesentlichen gleichbleibende Lastwerte für die Haftung der Ankerstange im Stahlhülsentest.

Die oben beschriebenen Messungen wurden mit den Mörtelmassen der Beispiele 1 und 5 wiederholt, wobei die Hinterschnitttiefe der Stahlhülsen zwischen 25 µm und 350 µm bei einer Hinterschnittbreite von 3 mm variiert wurden.

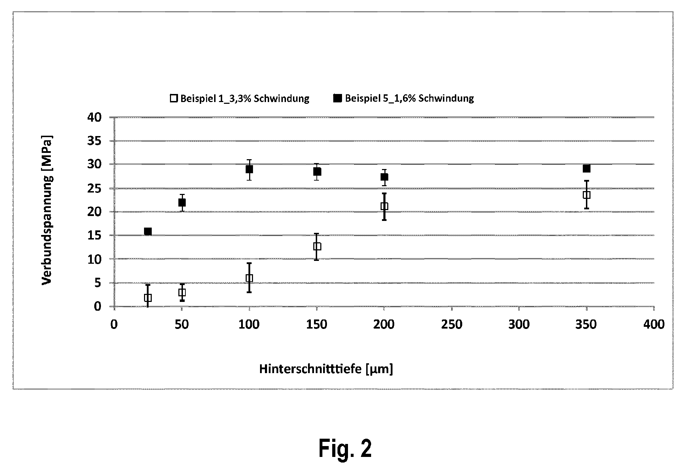

In Fig. 2 ist die Abhängigkeit der Verbundspannung von der Hinterschnittbreite der Ankerstange für die Referenzmasse gemäß Beispiel 1 und die Zweikomponenten-Mörtelmasse gemäß Beispiel 5 dargestellt, die einen niedrigeren Doppelbindungsanteil aufweist. Zu erkennen ist, dass die Mörtelmasse gemäß Beispiel 5 aufgrund des geringeren Polymerisationsschrumpfes schon ab Hinterschnitttiefen von 100 µm eine im Wesentlichen gleichbleibende Verbundspannung ergibt, während die Referenzmasse gemäß Beispiel 1 bei einer glatteren Oberfläche mit niedriger Hinterschnitttiefe leichter versagt und erst bei rauen Oberflächen mit Hinterschnitttiefen ab 200 µm eine hinreichende Auszugsfestigkeit aufweist.

## Patentansprüche

1. Zweikomponenten-Mörtelmasse mit einer Harzkomponente (A), die wenigstens eine härtbare Verbindung mit radikalisch polymerisierbaren Kohlenstoff-Kohlenstoff-Doppelbindungen enthält, und einer Härterkomponente (B), die ein Härtungsmittel für die wenigstens eine härtbare Verbindung der Harzkomponente (A) enthält, wobei die Harzkomponente (A) und/oder die Härterkomponente (B) als weiteren Bestandteil mindestens einen anorganischen Zusatz enthält, **dadurch gekennzeichnet, dass** der Anteil der radikalisch polymerisierbaren Kohlenstoff-Kohlenstoff-Doppelbindungen in der Mörtelmasse weniger als 0,050 mol pro 100 g der Mörtelmasse beträgt.

2. Mörtelmasse nach Anspruch 1, **dadurch gekennzeichnet, dass** der Anteil der radikalisch polymerisierbaren Kohlenstoff-Kohlenstoff-Doppelbindungen in der Mörtelmasse höchstens 0,045 mol-% pro 100 g der Mörtelmasse beträgt, bevorzugt höchstens 0,040

3. Mörtelmasse nach Anspruch 1 oder 2, **dadurch gekennzeichnet, dass** eine lineare Schwindung der Mörtelmasse unter 3 % liegt, bevorzugt unter 2,5 %.

4. Mörtelmasse nach einem der vorangehenden Ansprüche, **dadurch gekennzeichnet, dass** die wenigstens eine härtbare Verbindung in der Harzkomponente (A) mindestens ein radikalisch härtbares Harz und mindestens einen Reaktivverdünner umfasst, wobei wenigstens einer der Reaktivverdünner eine Molmasse von mindestens 250 g/mol aufweist, bevorzugt von mindestens 300 g/mol.

5. Mörtelmasse nach Anspruch 4, **dadurch gekennzeichnet, dass** mindestens eine Reaktivverdünner mit einer erhöhten Molmasse von mindestens 250 g/mol in einem Anteil von mindestens 50 Gewichtsprozent in der Harzkomponente (A) vorliegt, bezogen auf das Gesamtgewicht der Reaktivverdünner, bevorzugt in einem Anteil von mindestens 75 Gewichtsprozent, besonders bevorzugt zu 100 Prozent.

6. Mörtelmasse nach Anspruch 4 oder 5, **dadurch gekennzeichnet, dass** die Reaktivverdünner höchstens eine oder zwei radikalisch polymerisierbare Kohlenstoff-Kohlenstoff-Doppelbindungen im Molekül aufweisen.

7. Mörtelmasse nach einem der Ansprüche 4 bis 6, **dadurch gekennzeichnet, dass** der Reaktivverdünner aus der aus Trimethylolpropantri(meth)acrylat, Methoxypolyethylenglykolmono(meth)acrylat, Bisphenol-A-(meth)acrylat, Novolakepoxidi(meth)acrylat, Di-[(meth)acryloylmaleoyl]-tricyclo-5.2.1.0.2.6-decan, PEG-di(meth)acrylaten, Tetraethylenglykol-di(meth)acrylat, ethoxylierten Bisphenol-A-diglycidyletherdi(meth)acrylaten mit wahlweise 2 bis 30 Ethoxygruppen, Tricyclodekandimethanoldimethacrylat und Norbornencarbonsäureglycidylethermethacrylat sowie Mischungen davon bestehenden Gruppe ausgewählt ist, bevorzugt aus ethoxyliertem Bisphenol-A-diglycidyletherdi(meth)acrylat, Tricyclodekandimethanoldimethacrylat und Norbornencarbonsäureglycidylethermethacrylat und Mischungen davon.

8. Mörtelmasse nach einem der Ansprüche 4 bis 7, **dadurch gekennzeichnet, dass** die Reaktivverdünner in einem Anteil von 10 bis 65 Gewichtsprozent in der Mörtelmasse enthalten sind, bezogen auf das Gesamtgewicht des härtbaren Harzes und der Reaktivverdünner.

9. Mörtelmasse nach einem der Ansprüche 4 bis 7, **dadurch gekennzeichnet, dass** das härtbare Harz eine mittleres Molgewicht Mn in einem Bereich von 400 bis 3000 g/mol aufweist.

10. Mörtelmasse nach einem der vorangehenden Ansprüche, **dadurch gekennzeichnet, dass** das radikalisch härtbare Harz ein Urethan(meth)acrylatharz umfasst.

11. Mörtelmasse nach einem der vorangehenden Ansprüche, **dadurch gekennzeichnet, dass** der anorganische Zusatz in einem Anteil von 50 bis 80 Gewichtsprozent vorliegt, bezogen auf das Gesamtgewicht der Masse, bevorzugt in einem Anteil von 65 bis 80 Gewichtsprozent.

12. Mörtelmasse nach einem der vorangehenden Ansprüche, **dadurch gekennzeichnet, dass** der anorganische Zusatz aus der aus anorganischen Füllstoffen, hydraulisch abbindenden oder polykondensierbaren anorganische Verbindungen, Modifikatoren und Mischungen davon ausgewählt ist.

13. Mörtelmasse nach einem der vorangehenden Ansprüche, **dadurch gekennzeichnet, dass** die Harzkomponente (A) zusammengesetzt ist aus:
einem radikalisch härtbaren Harz in einem Anteil von 10 bis 45 Gew.-%;
wenigstens einem Reaktivverdünner in einem Anteil von 5 bis 25 Gew.-%;
einem Beschleuniger in einem Anteil von 0 bis 3,0 Gew.-%;
einem Reaktionsinhibitor in einem Anteil von 0 bis 1,0 Gew.-%; und
wenigstens einem anorganischen Zusatz in einem Anteil von 50 bis 80 Gew.-%; und
wobei die Summe aller Anteile 100 Gewichtsprozent ergibt, und wobei das Gewichtsverhältnis von Reaktivverdünner zu radikalisch härtbarem Harzes in einem Bereich von 1:5 bis 2:1 liegt bevorzugt von 1:3 bis 2:1.

14. Mörtelmasse nach einem der vorangehenden Ansprüche, **dadurch gekennzeichnet, dass** die Masse in einer Patrone, einer Kartusche oder einem Folienbeutel vorliegt, wobei die Harzkomponente (A) und die Härterkomponente (B) in voneinander getrennten Kammern angeordnet sind.

15. Verwendung der Zweikomponenten-Mörtelmasse gemäß einem der vorhergehenden Ansprüche zur chemischen Befestigung von Bauteilen wie Ankergewindestangen, Bewehrungseisen, Gewindehülsen und Schrauben, in Bohrlöchern, die in einem mineralischen Untergrund vorliegen.
